Europäisches Patentamt

European Patent Office

Office européen des brevets

(11) Publication number: **0 330 402**
**A2**

## EUROPEAN PATENT APPLICATION

(21) Application number: **89301616.2**

(22) Date of filing: **20.02.89**

(51) Int. Cl.⁴: **B60L 7/12 , H02P 3/14**

(30) Priority: **20.02.88 GB 8803990**

(43) Date of publication of application:
**30.08.89 Bulletin 89/35**

(84) Designated Contracting States:
**DE FR IT**

(71) Applicant: **FKI CABLEFORM LIMITED**
**Gratrix Works Gratrix Lane**
**Sowerby Bridge, HX6 2PH(GB)**

(72) Inventor: **Morton, John**
**33 Dean Lane Hazel Grove**
**Stockport Cheshire(GB)**
Inventor: **Fox, Alistair Morley**
**11 Hill Rise Romily**
**Stockport Cheshire(GB)**

(74) Representative: **Stanley, David William et al**
**APPLEYARD LEES & CO. 15 Clare Road**
**Halifax**
**West Yorkshire HX1 2HY(GB)**

(54) Braking of electric motors.

(57) Apparatus for controlling braking of a reversible electrical motor 4 comprises a first detector 11 for detecting the position of a reversing switch 10, which indicates a selected direction of motion of the motor 4. The detector 11 outputs a corresponding signal to a controller 3. A second detector 12 detects the actual direction of rotation of the motor 4, and also outputs a corresponding signal to the controller 3. An electronic switch 6 is controlled by the controller 3 so as to control current fed to the motor 4 as to achieve a braking effort. The controller 3 senses the deceleration rate of the motor 4 via a current sensor 5. When the output signals of the first and second detectors 11 and 12 indicate that the axial motion of the motor 4 is opposite to that selected, the braking effort of the motor 4 is so controlled as to maintain deceleration of the motor above a predetermined level.

## BRAKING OF ELECTRIC MOTORS

This invention relates to the braking of electric motors, and is concerned particularly, although not exclusively, with the braking of motors of battery electric vehicles.

There are many different types of battery electric vehicles, including fork lift trucks, towing tractors and railway locomotives. By way of example, a typical drive configuration for a battery electric fork lift truck comprises an accelerator and a direction lever, both of which control the electric drive, and a brake pedal which controls an hydraulic brake system.

The common method of driving such a fork lift truck is to select a desired positive direction (that is either forward or reverse) by means of the direction lever, and depress the accelerator as required, to achieve a variable acceleration which is dependent upon the pedal position.

In order to brake, it is common practice to throw the direction lever to the opposite direction, which reverses the field connections to the electric motor, and causes braking. The braking occurs at a level which is proportional to the position of the accelerator pedal, but control circuitry ensures that the braking effort is carried out at a much lower percentage of the drive effort. This is essential since, in braking, a very much higher torque is achieved for a given applied current, than in drive. In fact, whereas drive torque reaches a limiting value at high speed, braking torque continues to increase with speed, so that a modest control current can give a very sharp braking effect at high speed. By the same token, the braking effort achieved by reversing the field connections tends to be very low at low speed.

This arrangement gives rise to a problem on inclines, and this may be illustrated by considering a vehicle travelling uphill in drive.

When the driver releases the accelerator, the motor is open circuited, and the vehicle rolls to a halt. Thereafter, the vehicle starts to roll backwards. The driver reactivates the accelerator but, as the vehicle is now travelling in a "negative" direction (with respect to the selected position of the direction lever) braking effort ensues. Depending on the incline, the vehicle may decelerate, but as it does so, the braking effort decreases proportionally.

Thus, unless the incline is nominal, the vehicle will continue to roll down the incline at a speed which is proportional to the gradient.

If the driver activates the hydraulic braking system, then the electric drive will typically be switched out by an automatic circuit (this being due to recent developments of standards in various countries). Therefore, if the driver subsequently activates the accelerator, the vehicle will start to roll down the incline again, before positive drive can be established. Thus, the motor remains in braking mode.

A solution has already been proposed to overcome this problem.

This entails the use of a logic circuit which detects the following three conditions:

(a) drive has taken place in a positive direction at a level of at least 50% of maximum driving effort.

(b) reverse (negative) direction has not been selected.

(c) braking (negative motion of the electric motor) has been detected.

If all of the above three conditions (a),(b) and (c) are satisfied, then the braking effort is increased n times by the logic circuit. For example, n may be 3 to 4.

Although this can be effective at relatively low speeds, this solution does have disadvantages and dangers.

For example, if braking is activated at higher speeds, then the multiplied braking effect can be spectacular. Further, the increased braking effect is a pre-set "best compromise" - it cannot take variable load into consideration.

Preferred embodiments of the present invention aim to provide battery electric vehicles which may be improved in this respect.

More generally, according to one aspect of the invention, there is provided apparatus for controlling braking of a reversible electric motor, the apparatus comprising:

first means for detecting a selected direction of motion of the motor;

second means for detecting the actual direction of motion of the motor;

third means for detecting the rate of deceleration of the motor;

braking means for effecting electrical braking of the motor; and

control means which is connected to receive output signals of said, first, second and third means and is operative to so control the braking means that, when the output signals of said first and second means indicate that the actual motion of the motor is opposite to that selected, the braking effort of the motor is such as to maintain deceleration of the motor above a predetermined level.

Said predetermined level may be zero, such that a positive braking effort is maintained, irrespective of speed. Alternatively, said predetermined level may be greater than zero, to ensure that a braking effort greater than a predetermined minimum level is maintained, irrespective of speed.

Said braking means preferably includes an electronic switch means for applying pulsed electrical energy to the motor.

In such a case, said third means may be operative to monitor the rate of change of mark/space ratio of said pulsed electrical energy which is necessary to maintain the motor current at a substantially constant level.

In another aspect, the invention provides a method of controlling braking of a reversible electric motor, comprising the steps of detecting a selected direction and the actual direction of motion of the motor; detecting the rate of deceleration of the motor; effecting electrical braking of the motor; and controlling said braking such that, when the actual motion of the motor is opposite to that selected, the braking effort of the motor is such as to maintain deceleration of the motor above a predetermined level.

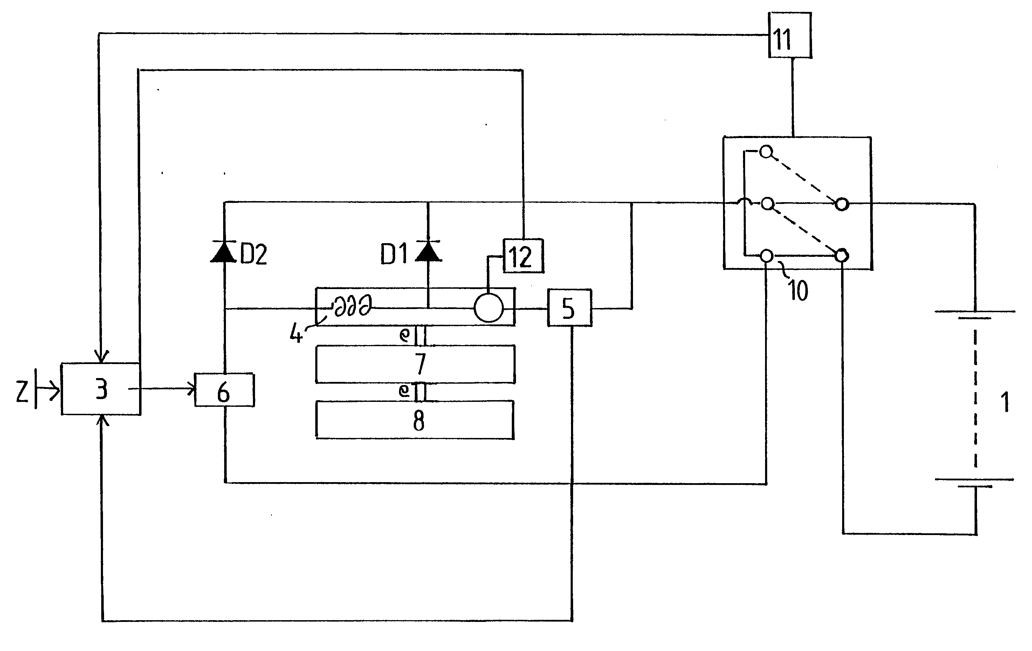

For a better understanding of the invention and to show how the same may be carried into effect, reference will now be made, by way of example, to the accompanying diagrammatic drawing, the single figure of which is a schematic circuit diagram of the electric drive system of a battery electric vehicle.

The vehicle comprises a d.c. series motor 4 which is supplied with energy from a battery 1, via a reversing switch 10, an electronic switch 6, and a current measuring device 5. A first diode D1 is connected across the armature of the motor, and a second diode D2 is connected across both the field and the armature. Drive from the motor 4 is transmitted to a vehicle drive wheel 8 via a gear box 7 or other suitable transmission.

An electronic controller 3 receives a demand signal from an accelerator pedal 2, and transmits to the switch 6 a series of control pulses, the mark/space ratio of which is proportional to the position of the pedal 2. The switch 6 controls the supply of energy to the motor 4 in pulses, the characteristics of which may be varied to vary the speed of the motor.

A first detector 11 detects the position of the reversing switch 10, and outputs a corresponding signal to the controller 3. A second detector 12 detects the actual direction of rotation of the motor 4, and also outputs a corresponding signal to the controller 3.

In the conditions illustrated, the motor 4 provides drive for the vehicle, at a rate proportional to the position of the accelerator pedal 2.

To initiate braking, the reversing switch 10 is thrown, to reverse the polarity of the supply to the field winding of the motor 4. As the motor 4 is continuing to rotate in a contrary direction, a braking torque is produced.

The controller 3 detects that the motor 4 is rotating in an opposite sense to that selected by the switch 10, and therefore automatically controls the current fed to the motor 4 via the electronic switch 6, in a braking mode. The switch 6 is so controlled by the controller 3 as to create a braking effort which decelerates the motor 4 at a rate which is at or above a predetermined level. The controller 3 senses the deceleration rate of the motor 4 via the current sensor 5.

For a given field current in the motor 4, the armature voltage (Va) and armature current (Ia = Va/Ra) are dependent upon speed. The braking torque produced by the motor 4 is therefore dependent upon speed, and the retardation of the vehicle is dependent upon both speed and load.

The armature current may be controlled via the controller 3/switch 6 so as to eliminate speed dependence. The controller 3 is able to estimate the retardation of the vehicle, by measuring the rate of change of mark/space ratio required to keep the motor current Im constant.

Thus, the illustrated circuit may operate so as to maintain retardation of the vehicle at a substantially constant level during braking. In particular, the motor current Im may be allowed to increase as the speed of the vehicle reduces, so as to maintain a substantially constant braking effort, even at low speeds. As the vehicle rolls to rest, the controller 3 switches into driving mode, and maintains a relatively high motor current Im to achieve a smooth transition from braking to drive.

In the illustrated arrangement, the detector 12 detects the direction of movement of the motor 4 directly. However, the direction of rotation may alternatively be detected indirectly - for example, by detecting movement of the actual vehicle, rather than of the motor 4.

It is convenient to detect the rate of retardation of the vehicle by means of the current measuring device 5. However, any other suitable means may be employed for detecting the deceleration rate -e.g. electromechanical transducers.

Our co-pending British Patent Application No. 87 04014 discloses an apparatus and method for regenerative braking, and the features disclosed in that specification may be utilised in or in conjunction with the apparatus and method disclosed in the present specification. Thus, the illustrated circuit provides a means whereby roll-back of a vehicle down any incline may be inhibited. Moreover, use of the circuit may avoid dangerously severe braking efforts, and the circuit may be equally effective in either direction of motion of the vehicle.

The invention is not restricted to the details of the foregoing embodiment(s). The invention extends to any novel one, or any novel combination, of the features disclosed in this specification and/or drawings, or to any novel one, or any novel combination, of the steps of any method or process disclosed herein.

## Claims

1. Apparatus for controlling braking of a reversible electric motor, the apparatus comprising:
first means for detecting a selected direction of motion of the motor;
second means for detecting the actual direction of motion of the motor;
third means for detecting the rate of deceleration of the motor;
braking means for effecting electrical braking of the motor; and
control means which is connected to receive output signals of said first, second and third means and is operative to so control the braking means that, when the output signals of said first and second means indicate that the actual motion of the motor is opposite to that selected, the braking effort of the motor is such as to maintain deceleration of the motor above a predetermined level.

2. Apparatus according to Claim 1, wherein said predetermined level is zero.

3. Apparatus according to Claim 1, wherein said predetermined level is greater than zero.

4. Apparatus according to any of Claims 1 to 3, wherein said braking means including electronic switch means for applying pulsed electrical energy to the motor.

5. Apparatus according to Claim 4, wherein said third means is operative to monitor the rate of change of mark/space ratio of said pulsed electrical energy which is necessary to maintain the motor current at a substantially constant level.

6. Apparatus for controlling braking of a reversible electric motor, the apparatus being substantially as hereinbefore described with reference to the accompanying drawing.

7. A method of controlling braking of a reversible electric motor, comprising the steps of detecting a selected direction and the actual direction of motion of the motor; detecting the rate of deceleration of the motor; effecting electrical braking of the motor; and controlling said braking such that, when the actual motion of the motor is opposite to that selected, the braking effort of the motor is such as to maintain deceleration of the motor above a predetermined level.

8. A method of controlling braking of a reversible electric motor, the method being substantially as described herein, with reference to the accompanying drawing.